# EUROPEAN PATENT APPLICATION

(11) **EP 1 136 866 A1**
(43) Date of publication of application: **26.09.2001**
(21) Application number: 00830217.6
(22) Date of filing: 22.03.2000
(51) Int. Cl.: G02B 7/182, F16H 25/20

(54) **Assembling device with micrometrical angular adjustment with high precision and great stability, especially for mirrors and other components used for laser applications**

(71) Applicant: CESI Centro Elettrotecnico Sperimentale Italiano Giacinto Motta S.P.A., 20134 Milano (IT)
(72) Inventor: Brioschi, Franco Enrico, 20050 Correzzana (MI) (IT)
(74) Representative: Mittler, Enrico

(57) **Abstract**

There is described an assembling device for mirrors or other components for laser applications consisting of a body (2) for housing the mirror (3). The body (2) has at least two segments (16, 17; 17, 40) and the device (1) has at least one mechanism (5; 21) for rotating the mirror (3) around an axis (X; Y) parallel to the mirror (3). The mechanism (5, 21) has a differential screw (6; 22) with two sections (7, 8; 23, 24) with different threading coupled to two balls (9, 10; 25, 26) which have through holes (11, 12; 27, 28) with different threading. The balls (9, 10; 25, 26) are engaged in relative seats (14, 15; 29, 30) in the two segments (16, 17; 17, 40) and can rotate around their own centre. The mechanism (5; 21) has one section (20; 41) that joins the two segments (16, 17; 17, 40) placed on one side opposite to the differential screw (6; 22) and parallel to it so that a tightening or loosening of the differential screw (6; 22) in the balls (9, 10; 25, 26) corresponds to a rotation of one of the two segments (16, 17; 17, 40) in relation to the other.

## Description

This invention is an assembling device with micrometrical angular adjustment with high precision and great stability, especially for mirrors and other components used for laser applications.

There are various technical sectors in which assembling with micrometrical adjustment is necessary; in particular in laser sources and systems into which they are integrated, mirrors for directing laser radiation are often used. Extreme care must be taken in aligning these mirrors in relation to each other or to other optical and/or electro-optical components which are part of the laser or of the system that contains it. And it is for this purpose that there are numerous mechanical devices on the market for assembling mirrors of that type, which are more commonly called "mirror holders" and through which precision of angular orientation to the order of tens of microradiants can be obtained. These mechanical devices are made so that the mirrors assembled therein can be rotated around two axes which are orthogonal to each other; the two rotations are independent from each other and are obtained using typically micrometric screws with suitable kinematic motions.

These devices, which are excellent for use in laboratories, have limits however for their so-called "in field" applications, that is, outside the production and experimental laboratory, for example various types of industrial use, health or military uses. In fact in these cases in addition to the adjustment precision, it is necessary that there is a certain stability in the positioning of the mirrors, also in view of vibrations or mechanical shocks that can occur during the transport of the equipment or their use in hostile environments.

Another disadvantage of these devices is their relatively large size, which is often such as to hinder their integration into equipment whose compactness is always of major importance, resulting in difficulty in transport and use.

In view of the technical art described, the object of this invention is to create an assembling device with micrometrical angular adjustment with high precision and great stability, especially for mirrors and other components used for laser applications, and which has stability and size that allow it to be used in places other than the laboratory.

According to the present invention, this object is reached through an assembling device for mirrors and other components for laser applications, comprising a body for housing the mirror, characterised in that said body has at least two segments and said device includes at least one mechanism for the rotation of said mirror around an axis parallel to said mirror, said mechanism including a differential screw with two sections of different threading coupled to two balls which have through holes with different threading, said balls engaging respective seats provided in said two segments and being able to rotate around their own centre, and one section that joins the two segments placed on one side opposite to said differential screw and parallel to it so that a tightening or loosening of said differential screw in said balls corresponds to a rotation of one of said two segments in respect of the other.

Preferably, said body has three segments, the mirror is housed in a first one of said segments and said device includes two mechanisms for the rotation of the mirror around two axes which are orthogonal to each other, a first mechanism acting between said first and a second one of said segments and a second mechanism acting between said second and a third one of said segments.

Thanks to the present invention, an assembling device with micrometrical angular adjustment with high precision and stability, especially for mirrors and other components used for laser applications, can be made with limited dimensions and permits fine adjustment of the rotation of the mirror and greater stability in positioning of the mirrors in relation to the known devices.

The characteristics and advantages of the present invention will be evident from the following detailed description of an embodiment thereof, illustrated as non-limiting example in the enclosed drawings, in which:
Figure 1 is a front view of the device according to the present invention;
Figure 2 is a section of the device in Figure 1 as per line II-II of Figure 1;
Figure 3 is a section of the device in Figure 1 as per line III-III of Figure 1;
Figure 4 is a rear view of the device in Figure 1;
Figure 5 is a right side view of the device in Figure 1;
Figure 6 is a section of the device in Figure 5 as per line VI-VI;
Figure 7 is a left side view of the device in Figure 1;
Figure 8 is a plan view of the device in Figure 1.

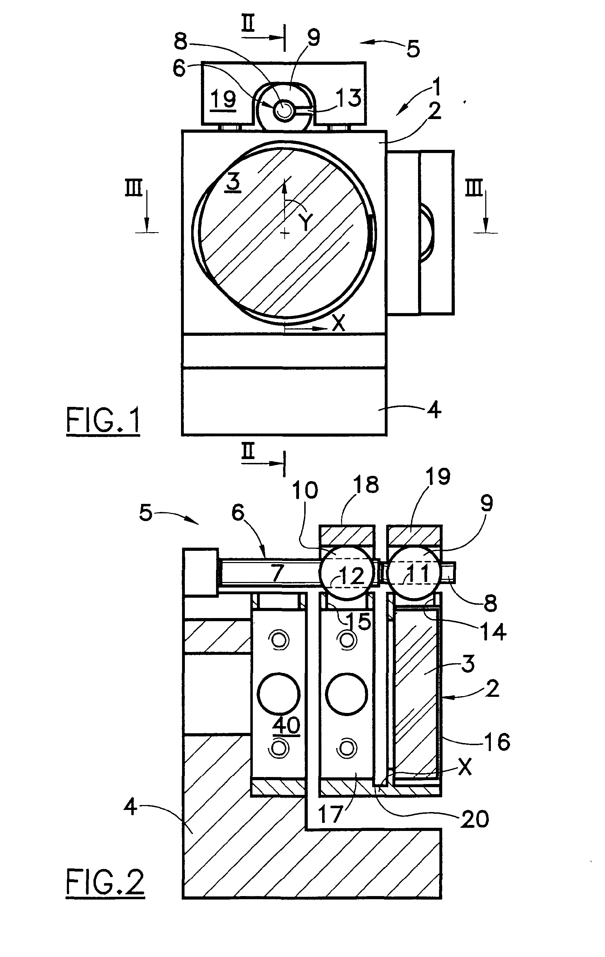

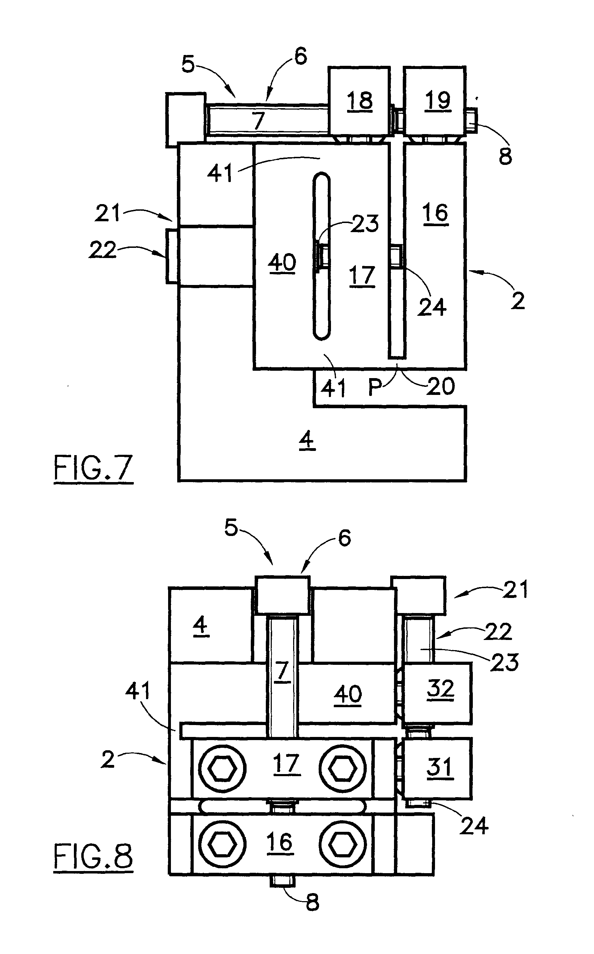

Figures 1-8 show an assembling device 1 provided with a body 2, usually in stainless steel, in which a mirror 3 or other optical component is mounted. The body 2 is integral with a support bracket 4 on which the body 2 is constrained and which enables the device 1 to be fixed to the structure of the system in which device 1 is used.

Device 1 is also provided with a first mechanism 5 which allows the mirror 3 to rotate around a first axis X parallel to mirror 3. This mechanism 5 is made of a differential screw 6 with two sections 7, 8 with different threading, perpendicular to mirror 3 (Figures 1, 2, 5, 7, 8). Screw 6 is coupled to two balls 9, 10, usually of brass, with threaded through holes 11, 12 with different threading, variable in accordance with the precision of the dynamics of the rotation required and equipped with an opening 13 made with a radial cut. Balls 9 and 10 are engaged respectively in holes 14, 15 made in the upper part of segments 16, 17 of body 2, are constrained by elements 18, 19 and can rotate around their own centre. In practice balls 9, 10 with their constraining elements 18, 19 act like spherical hinges without any clearance. Segment 16 houses mirror 3 and segments 16, 17 are joined by a section 20 in the lower part.

By rotating screw 6 clockwise or anticlockwise a forward or backward movement is obtained of the two balls 9, 10 in respect of the screw itself, which will be different for each of the two balls as it is proportional to the corresponding thread pitch, in the example shown it will be greater for ball 10 as it has a larger threaded hole 11. In this manner, changing the distance of the centres of the balls, there is also a change of the distance of the segments 16 and 17 integral with balls 10 and 9, which will therefore get further away from each other or will get closer to each other. Nevertheless, as segments 16 and 17 are joined in the lower part by section 20, the distancing or bringing closer of their upper ends will cause a rotation of segment 16 in relation to segment 17 around an axis which is parallel to axis X and passing through a middle point P of section 20. Therefore section 20 represents a hinge without mechanical clearance.

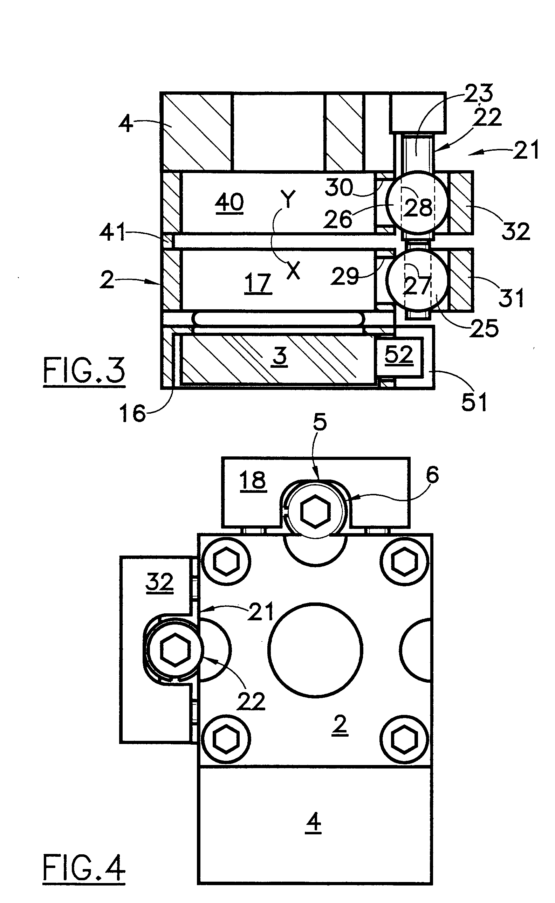

Device 1 also has a second mechanism 21 which permits rotation of mirror 3 in relation to a second axis Y parallel to the plane of mirror 3 and orthogonal to axis X. This mechanism 21 (figures 3, 5 and 8) also includes a differential screw 22 with two sections 23, 24 with different threading. This screw 22 is coupled to two balls 25, 26, usually of brass, with threaded through holes 27, 28 with different threading, variable in accordance with the precision of the dynamics of the rotation required, which have an opening like the opening 13, made by radial cut. The balls 25 and 26 are respectively engaged in holes 29, 30 made in a side extremity of segments 17, 40 of body 2, are constrained by elements 31, 32 and can rotate around their own centre. The two segments 17 and 40 are joined by a section 41 similar to section 20 but orthogonal to it. Segment 40 is integral to bracket 4 and therefore the rotation must be considered in relation to that segment.

The operation of mechanism 21 is similar to that of mechanism 5, in fact the distancing of the two balls 25 and 26 with the different thread leads permits distancing of the side extremity of segment 17 in relation to the corresponding side extremity of segment 40, so that segment 17 hinged to 41 rotates around segment 40.

Opening 13 present in each of the balls 9, 10, 25, 26 enables preventive distortion to be applied to it through compression which gives rise to reciprocal rotation of the hemispheres in relation to the centre. In this manner it is possible to recover any clearance between screw and lead screw threads caused by imperfect working.

The kinematic systems made permit very fine angular adjustment as, for example, for kinematic systems 5 the angle is given by the mutual movement of the pair of balls 9, 10 divided by the distance between the balls and point P, a distance denominated arm. The mutual movement of the two balls is given, for every turn of screw 6, by the pitch difference of the two threads (if for example this difference is 0.2 mm/turn and the arm is about 30 mm there is an angle of about 6.7 mrad/turn). Since the screw can be rotated by very small fractions of a turn, the precision that can be obtained with devices which have a limited arm are of the order of tens of microradiants.

The ways in which the spherical hinges are made, which provide for rotation between the segments 16 and 17 only by distortion of section 20, and the preventive distortion of the balls cut along a radius enable movement without clearance and therefore repeatable many times and stable as it is possible to make coupling of the two balls with 19 and 20 with screw 6 very solid, making every undesired rotation very difficult, also after shocks or vibration of a certain size.

Given that the device 1 enables good precision of angular regulation also for limited arm lengths, the dimensions of this device 1 are very limited.

The above-mentioned angular adjustment and movement without clearance shown for kinematic system 5 can be made also for kinematic system 21.

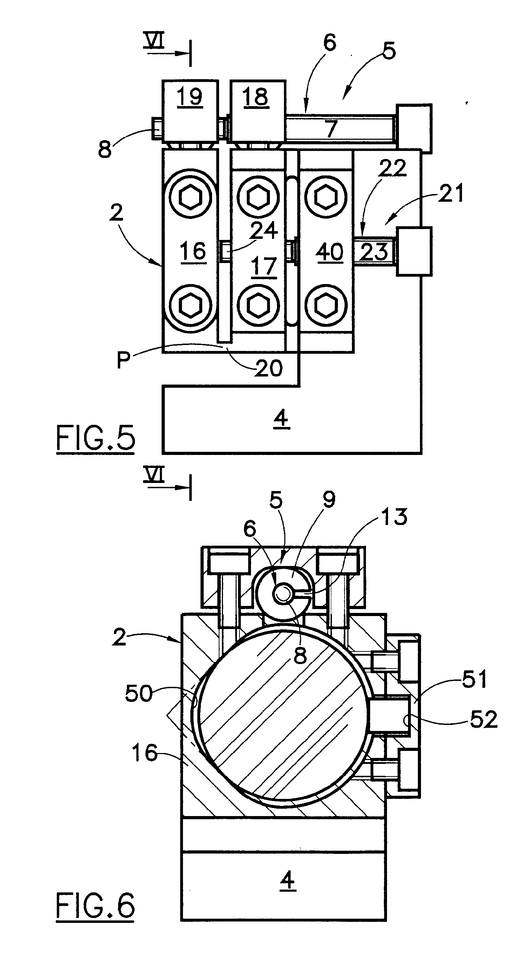

Mirror 3 is positioned in device 1 by forcing it transversally into a centre slot 50 with V-projection at 90°, contained in segment 16. Mirror 3 is pressed by a compression device 51 and an elastic element 52 (Figure 6).

In this manner the constraint of mirror 3, usually of cylindrical shape, permits well-defined and repeatable positioning, without possible mechanical clearance between mirror and slot.

Moreover the pressure made to keep mirror 3 in place is transversal and therefore does not cause mechanical distortion of the reflecting surface which could induce distortion of the wave front of the incident laser radiation that implies a clear decline of the useful characteristics of the laser beam.

## Claims

1. Assembling device for mirrors or other components for laser applications including a body (2) for housing the mirror (3), **characterised in that** said body (2) has at least two segments (16, 17; 17, 40) and said device (1) includes at least one mechanism (5; 21) for the rotation of said mirror (3) around an axis (X; Y) parallel to said mirror, said mechanism (5, 21) including a differential screw (6; 22) with two sections (7, 8; 23, 24) with different threading coupled with two balls (9, 10; 25, 26) with through holes (11, 12; 27, 28) with different threading, said balls (9, 10; 25, 26) being engaged in respective seats (14, 15; 29, 30) provided in said said two segments (16, 17; 17, 40) and being able to rotate in relation to their own centre, and one section (20; 41) which joins the two segments (16, 17; 17, 40) placed on a side opposite to said differential screw (6; 22) and parallel to it so that a tightening or loosening of said differential screw (6; 22) in said balls (9, 10; 25, 26) corresponds to a rotation of one of said two segments (16, 17; 17, 40) in relation to the other.

2. Device according to claim 1, **characterised in that** said body (2) has three segments (16, 17, 40), said mirror (3) is housed in a first one (16) of said segments (16, 17, 40) and said device (1) consists of two mechanisms (5, 21) for the rotation of said mirror (3) around two axes (X, Y) which are orthogonal to each other, a first mechanism (5) acting between said first (16) and a second (17) of said segments (16, 17, 40) and a second mechanism (21) acting between said second (17) and a third (40) of said segments (16, 17, 40).

3. Device according to claim 1, **characterised in that** each of said balls (9, 10; 25, 26) has a radial opening (13).

4. Device according to claim 1, **characterised in that** said body (2) has a centre slot (50) with V-projection in which said mirror (3) is stably positioned by an elastic element (52) kept under pressure on it.

5. Device according to claim 1, **characterised in that** said seats (14, 15; 29, 30) of the balls (9, 10; 25, 26) are placed in an extremity of said two segments (16, 17; 17, 40).

6. Device according to claim 1, **characterised in that** said body (2) of said device (1) is made of very elastic stainless steel.
